(19) **Europäisches Patentamt**
**European Patent Office**
**Office européen des brevets**

(11) **EP 4 629 110 A1**

(12) **EUROPEAN PATENT APPLICATION**

(43) Date of publication:
08.10.2025 Bulletin 2025/41

(51) International Patent Classification (IPC):
*G06F 18/2415* (2023.01)     *G06F 18/2433* (2023.01)
*G06V 10/764* (2022.01)     *G06V 20/58* (2022.01)

(21) Application number: 24168790.4

(22) Date of filing: 05.04.2024

(52) Cooperative Patent Classification (CPC):
G06F 18/2433; G06F 18/2415; G06V 10/764;
G06V 20/58

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• TOYOTA JIDOSHA KABUSHIKI KAISHA
Aichi-ken 471-8571 (JP)
• Czech Technical University in Prague
16627 Praha 6 (CZ)

(72) Inventors:
• CHUMERIN, Nikolay
1140 Brussels (BE)
• VOJIR, Tomas
16627 Prague 6 (CZ)
• MATAS, Jiri
16627 Prague 6 (CZ)
• SOCHMAN, Jan
16627 Prague 6 (CZ)

(74) Representative: Cabinet Beau de Loménie
103, rue de Grenelle
75340 Paris Cedex 07 (FR)

Remarks:
Claims filed after the date of filing of the application
(Rule 68(4) EPC).

(54) **SYSTEM AND METHOD FOR PORTION-LEVEL OUT-OF-DISTRIBUTION DETECTION**

(57) A system (30) for detecting whether a portion of an input (10) belongs to at least one class, the system being configured to:
- encode at least one fragment ($p$) of the input, including the portion;
- obtain an in-distribution probability distribution of the class, i.e. a distribution of a probability to belong to the class as a function of a result of at least one classifier model (14) configured to classify the fragment;
- obtain an out-of-distribution probability distribution, i.e. a distribution of a probability not to belong to any one of the classes as a function of the result of the classifier model (14);
- determine whether the portion belongs to the classes based on a comparison between a likelihood that the fragment ($p$) belongs to one of the classes, determined based on the in-distribution probability distribution, and a likelihood that the fragment ($p$) does not belong to any class, determined based on the out-of-distribution probability distribution.

FIG.1

**Description**

1. Field of the invention

The present disclosure relates to the field of machine learning, and more particularly to a system and method for detecting whether a portion of an input belongs to at least one class. The system and method may find applications in all kinds of industries, including the automotive industry. For instance, the system and method may be used in the context of computer vision and/or safety-critical applications to understand a vehicle's environment in order to adequately control it, or to monitor and support human activities in places such as a factory.

2. Description of Related Art

Automated systems are increasingly used to classify inputs into one or more categories, also known as classes. However, while these systems are usually able to identify the most frequent classes, a given input may happen not to belong to any of those classes. The ability to recognize such inputs has been referred to differently based on the context in which it emerged and is generally known as out-of-distribution (OOD) detection, open set recognition (OSR), anomaly or outlier detection, or yet one-class classification.

For instance, the problem of OOD detection is important in many computer vision applications. One can even argue that no model obtained by machine learning on a training set should be deployed without the OOD detection ability, since in practice it is almost never the case that all the data the model will make predictions on will be drawn from the same base data that generated the aforementioned training set. For undetected out-of-distribution data, the prediction will in general be arbitrary, with possibly grave real-world consequences, especially in safety-critical applications such as assisted or autonomous driving.

Existing OOD detection solutions focus on improving the OOD robustness of a classification model trained exclusively on in-distribution data. However, this implies making an assumption about the form of allowed anomalies, which goes against the definition of the word 'anomaly' itself. Thus, there is a need for a method applicable to widest possible spectrum of problems, which would be devoid of task specific biases introduced through auxiliary (synthetic) OOD data.

In this perspective, while [REF. 1] describes a satisfactory method for input-level classification (e.g. image-level classification), there is a need for detecting OOD elements in portions of those inputs (e.g. at pixel level), for instance identifying an obstacle in a road image or an industrial anomaly in an image of a manufactured part.

The following references give further background information about machine learning:

[REF. 1] Tomáš Vojíř, Jan Sochman, Rahaf Aljundi, and Jiří Matas. Calibrated Out-of-Distribution Detection with a Generic Representation. In ICCVW, 2023.

[REF. 2] Maxime Oquab, Timothée Darcet, Theo Moutakanni, Huy V. Vo, Marc Szafraniec, Vasil Khalidov, Pierre Fernandez, Daniel Haziza, Francisco Massa, Alaaeldin El-Nouby, Russell Howes, Po-Yao Huang, Hu Xu, Vasu Sharma, Shang-Wen Li, Wojciech Galuba, Mike Rabbat, Mido Assran, Nicolas Ballas, Gabriel Synnaeve, Ishan Misra, Herve Jegou, Julien Mairal, Patrick Labatut, Armand Joulin, and Piotr Bojanowski. Dinov2: Learning robust visual features without supervision, 2023.

[REF. 3] Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International Conference on Machine Learning, pages 8748-8763. PMI,R, 2021.

[REF. 4] Diederik P Kingma and Jimmy Ba. Adam: A method for stochastic optimization. arXiv preprint ar-Xiv:1412.6980, 2014.

[REF. 5] Jerzy Neyman and Egon Sharpe Pearson. Ix. on the problem of the most efficient tests of statistical hypotheses. Philosophical Transactions of the Royal Society of London. Series A, Containing Papers of a Mathematical or Physical Character, 231(694-706):289-337, 1933.

[REF. 6] Lojze Zust, Janez Pers, and Matej Kristan. LaRS: A Diverse Panoptic Maritime Obstacle Detection Dataset and Benchmark. In ICCV, 2023.

[REF. 7] Tomáš Vojiř and Jiří Matas. Image-Consistent Detection of Road Anomalies As Unpredictable Patches. In WACV, 2023.

[REF. 8] Vitjan Zavrtanik, Matej Kristan, and Danijel Skocaj. DRAEM - A Discriminatively Trained Reconstruction Embedding for Surface Anomaly Detection. In ICCV, 2021.

[REF. 9] Kopf et al. "Joint Bilateral Upsampling", Proceedings of SIGGRAPH 2007.

[REF. 10] Fu et al. "FeatUp: A Model-Agnostic Framework for Features at Any Resolution", ICLR 2024.

[REF. 11] Dosovitskiy et al. "An Image is Worth 16x16 Words: Transformers for Image Recognition at Scale", ICLR 2021.

SUMMARY

In this respect, the present disclosure relates to a system for detecting whether a portion of an input belongs to at least one class, the system being configured to:

- encode at least one fragment of the input, including the portion;
- obtain an in-distribution probability distribution of the at least one class, the in-distribution probability distribution being a distribution of a probability to belong to the at least one class as a function of a result of at least one classifier model configured to classify the fragment;
- obtain an out-of-distribution probability distribution, the out-of-distribution probability distribution being a distribution of a probability not to belong to any one of the at least one class as a function of the result of the at least one classifier model;
- determine whether the portion belongs to the at least one class based on a comparison between a likelihood that the at least one fragment belongs to one of the at least one class, determined based on the in-distribution probability distribution, and a likelihood that the at least one fragment does not belong to any one of the at least one class, determined based on the out-of-distribution probability distribution.

The system may include a processor configured to carry out the recited steps. In embodiments, the system may have the hardware structure of a computer.

The system is configured not only to determine to which class the portion of an input belongs, if any, but to detect whether the portion of the input does not belong to any of the at least one class.

In the context of the present disclosure, the portion of the input refers to a sub-element of the input. The input comprises a plurality of such portions. The portions are not unrelated to one another but form together, within the input, instances that belong to at least one class. A fragment of the input refers to a sub-element of the input including the portion. The input comprises a plurality of such fragments. The fragment includes one or more portions. The fragment may consist in the portion only or in the portion and other data (e.g. other portions). The fragments may overlap or not within the input. For instance, when the input is an image, a portion of the input may be a pixel and a fragment comprising the portion may be a patch (e.g. a sub-area of the image) comprising only said pixel or a plurality of pixels.

The input (or, as the case may be, the fragment) may be obtained from a sensor, e.g. a microphone, an imaging device such as a camera, electrodes, etc. The system may comprise adequate means for pre-processing the input, or a fragment thereof including the portion, to transform it to a form suitable for the determination step. In particular, the encoding aims to provide a representation of the fragment in a feature space to facilitate the determination.

The at least one class may comprise two classes or more, for instance five classes or more, ten classes or more or yet twenty classes or more.

At least one classifier model may be provided to determine to which class the fragment belongs. As used herein, for conciseness and unless the context indicates otherwise, "a", "an", and "the" are intended to refer to "at least one" or "each" and to include plural forms as well. A result of the classifier model may be any output of the classifier model based on which it can be determined to which class the fragment belongs. For instance, a result of the classifier model may include a score, a logit, a distance, etc., or a combination thereof, as applicable.

The in-distribution (ID) probability distribution, hereinafter shortened as ID distribution, is therefore expressed as a probability as a function of the result of the classifier model, irrespective of how it is obtained. In practice, as will be discussed below, the ID distribution may be obtained based on the results of the classifier model. The ID distribution may be a per-class distribution. In other words, the ID distribution of the at least one class may include one or more probability distributions for the respective at least one classes known to the classifier model (e.g. one distribution per class), as opposed to single distribution for all the known classes. Nevertheless, for the sake of conciseness, ID distribution is used in singular herein, without loss of generality.

The out-of-distribution (OOD) probability distribution, hereinafter shortened as OOD distribution, is likewise expressed as a probability as a function of the result of the classifier model, irrespective of how it is obtained. In practice, as will be discussed below, the OOD distribution may be obtained independently from the results of the classifier model. The OOD may be obtained based on theoretical considerations about the classifier model. As opposed to the per-class ID distribution, the OOD distribution may be a single distribution modeling all OOD data.

More generally, the OOD distribution and the ID distribution may be expressed in the same space.

The classifier model may take, as an input, features extracted from the fragment, e.g. the encoded fragment. The features may be extracted by a feature extractor or encoder, such as a neural network model. The type of encoder may depend on the format of the input; for instance, if the input is an image, a convolutional neural network (CNN) may be used as an encoder.

Based on the ID distribution, the system may determine a likelihood that the fragment belongs to one of the at least one class, referred to as the ID likelihood. Besides, based on the OOD distribution, the system may determine a likelihood that the fragment does not belong to any one of the at least one class, referred to as the OOD likelihood. The system compares the ID likelihood to the OOD likelihood. The comparison may encompass any operation, e.g. one or more mathematical operations, that enables comparing the two likelihoods, such as a difference, a ratio, etc. The ID likelihood and/or OOD likelihood may be based on the probability for the fragment to belong or not to one of the classes, with possible factors, offsets, etc.

In an example, the ID and/or OOD likelihoods may be obtained by inputting the fragment to the at least one classifier model to get a classification result, and determining the ID and/or OOD likelihoods based on the classification result and the ID and/or OOD distributions, respectively.

By basing the OOD determination not only on the ID distribution but also on an OOD distribution, the proposed system can better discriminate between ID fragments and OOD fragments within the same input, and therefore between ID and OOD portions of the input included in that fragment. Accordingly, OOD detection is enhanced.

The OOD determination for the portion may be derived from the OOD determination for the fragment by any suitable method, e.g. upscaling the fragment-level OOD determination to portion-level resolution, e.g. by bilinear interpolation, joint bilateral upsampling (e.g. [REF. 9]) or machine learning-assisted upscaling (e.g. [REF. 10]).

Optionally, the system is further configured to determine a plurality of etalons representing some or each of the at least one class, wherein at least one of the in-distribution probability distribution and the out-of-distribution probability distribution is determined based on the etalons. Thus, an etalon is a representation of a typical member of the at least one class, that is representative of the characteristics of the class (determined e.g. based on the training data). However, because of high intra-class variability at fragment-level (e.g. a car windshield and a car wheel both belong to the "car" class but look very different from each other), it is advantageous to model each class not only by one etalon, typically the mean, but by a plurality of such etalons. The plurality of etalons can then be used to determine the aforementioned result of the at least one classifier model, and thus at least one of the ID distribution and the OOD distribution. This results in a finer classification and, as a consequence, a more robust OOD detection. Each of the at least one class may be represented by a plurality of etalons (that is: several etalons represent the same class). The etalons may be defined in the feature space where the at least one fragment is encoded.

Optionally, the plurality of etalons is determined in an iterative manner: the plurality of etalons may be initialized and refined iteratively. Thus, the etalons provide a better representation of the at least one class.

Optionally, the system is configured to determine the plurality of etalons by minimizing a smooth approximation of a K-median type problem. The K-median type problem is a variant of the well-known K-means clustering problem, in which clusters are represented by centroids (the aforementioned etalons) determined by calculating the median of each cluster. In the K-median problem, the error over all clusters is minimized with respect to the 2-norm distance metric, as opposed to the squared 2-norm distance metric in K-means. However, due to the minimum operator in the K-median type problem, the determination of the etalons may be difficult to optimize or may get stuck in local minima. By minimizing a smooth approximation of a K-median type problem, the system can determine the plurality of etalons more easily (e.g. by methods such as stochastic gradient descent), and in a way less susceptible to local minima and less sensitive to outliers. Overall, the etalon determination is improved. As commonly known in mathematics, smooth means that the approximation is differentiable and that it has a continuous derivative with respect its variables, optionally not only for the first derivative but also for a desired number of subsequent derivatives; in other words, the smooth approximation is a function of class $C^k$, k greater than or equal to 1.

Optionally, the smooth approximation is made harder as the minimizing process progresses. For instance, the smooth approximation may include a parameter determining how smooth the approximation is, and this parameter may be changed during minimization so that the smooth approximation gets closer and closer to a hard minimum assignment of the etalons. Thus, the advantages of both a soft assignment (less susceptible to local minima, easier to optimize) and a hard assignment (ultimate goal of the K-median type problem and accurate determination) are combined.

Optionally, each of the etalons representing a given class is defined to cover the same number of training samples of the given class, with a tolerance. This ensures a better representation of the given class (e.g. one of the at least one class) by the plurality of etalons. The tolerance may be predetermined or adapted to the data considered, and defines the margin for the number of training samples represented by an etalon.

Optionally, the system is further configured to re-initialize etalons that represent less training samples than a threshold, optionally after a warm-up time. Determining etalons, especially in an iterative manner, may be dependent from the etalon initialization. When it is determined that an etalon is not as representative as it should, i.e. that it represents less training samples than a threshold, the etalon may be re-initialized elsewhere. The threshold may be determined dynamically, e.g. based on the total number of training samples and/or on the number of training samples covered by the other etalons. The re-initialization may take place after a warm-up time, i.e. after a certain number (predetermined or dynamically defined) of iterations, in order to allow the iterations to improve the etalon determination first. Thanks to the re-initialization, the etalons are better determined, without involving any computationally-expensive heuristic initialization method.

Optionally, at least one of the in-distribution probability distribution and the out-of-distribution probability distribution is determined as a function of a distance to a nearest etalon for the at least one class. The distance to a nearest etalon provides a satisfactory metric which is simple while taking into account the intra-class variability thanks to the plurality of etalons. The distance to a nearest etalon therefore gives a discriminative basis to model the ID distribution and/or the OOD distribution. The distance to a nearest etalon may be used as such or in a transformed manner (e.g. normalized and/or part of a greater formula) as desired.

Optionally, at least one of the in-distribution probability distribution and the out-of-distribution probability distribution is determined as a function of an output score of the classifier model. Thus, determining the ID likelihood and the OOD likelihood of the fragment can be carried out in a convenient and simple way, based merely on the output score of the classifier model for the fragment.

Optionally, the at least one classifier model is a machine learning model, e.g. a neural network model, e.g. configured to carry out semantic segmentation. Optionally, in embodiments, the at least one classifier model includes a multi-layer perceptron. A multi-layer perceptron is a fully-connected type of feedforward neural network, which may comprise a plurality of perceptron layers. In spite of its overall simple principles, this neural network provides helpful classification results in the context of the proposed system. Robustness of the OOD detection is thus ensured while keeping the system relatively simple.

Optionally, the in-distribution probability distribution and the out-of-distribution probability distribution are N-dimensional distributions, N greater than or equal to 2. Each dimension of the N-dimensional distributions may correspond to a different property of the samples. For instance, one dimension may be a result of the classifier model while another dimension may be the distance to the nearest etalon for the class under consideration. Using N-dimensional distributions enables to combine the strengths of different approaches and therefore to provide a better characterization of the ID and/or OOD distributions. As a consequence, the OOD detection performed by the system is more robust.

Optionally, N is less than or equal to 10, preferably 8, preferably 5 or yet preferably 3. While this is not a formal requirement of the system, it is advantage to limit the number of dimensions in which the ID distribution and the OOD distributions are modelled in order to avoid redundant representations of the classes.

Optionally, at least one of the in-distribution probability distribution and the out-of-distribution probability distribution is modeled as a normal distribution. A normal distribution is known *per se* and characterized by a mean and a standard deviation, variance or covariance. The normal distribution may be an N-dimensional normal distribution. In alternatives, more complex techniques could be used to model the ID distribution and/or the OOD distribution, such as the non-parametric Parzen estimate (also known as Kernel Density Estimation, which is known *per se*).

The normal distribution, although being an approximation for the ID distribution, turns out to be reasonably representative over a wide range of classification tasks. As regards the OOD distribution, the normal distribution offers a reasonable estimation without requiring knowledge of the training dataset or of the OOD elements. Therefore, a normal distribution for the ID distribution and/or the OOD distribution enables the system to be implemented in an efficient and effective manner.

Optionally, at least one of the in-distribution probability distribution and the out-of-distribution probability distribution is determined based on results of the at least one classifier model on a training dataset thereof. As regards the ID distribution, for instance, the normal distribution (or any other desired distribution) for the ID distribution may be fitted to the training data for the classifier model. As regards the OOD distribution, although not necessary, the classifier model training data may be taken into account to model the OOD distribution more accurately, e.g. to make it cover the whole range of data. As an alternative, auxiliary OOD data may be used instead of the classifier model training data. Thus, the ID distribution and/or the OOD distribution can be made more specific to the classes at stake, thereby improving the OOD detection ability of the system as a whole.

Optionally, the at least one class comprises two or more classes and the comparison takes into account a threshold which equalizes a false negative rate for the two or more classes. The ID likelihood and/or the OOD likelihood, and/or any combination thereof, can be compared to the threshold. In order to avoid that some classes produce higher false negative rates than others, the threshold is adapted to equalize a false negative rate for the two or more classes. The threshold may be a function of a cumulative histogram of the two or more classes. This enables proper calibration of the system. In addition, this property is important in safety-critical application where samples from certain classes otherwise tend to be reported as OOD data more often than those from other classes.

Optionally, the system is further configured to upscale the encoded at least one fragment. This upscaling may take place during inference only, as opposed to training phases of the system. Upscaling the encoded fragment improves the OOD detection results in a context in which the system considers fragments of the input, which may have a lower resolution than the portions of the input themselves.

Optionally, the input comprises at least one image, at least one video, at least one audio signal, at least one electrical signal or a combination thereof. As mentioned above, the input may be obtained from an appropriate sensor. Accordingly, the portion may be a pixel, an audio sub-signal (e.g. from a temporal or frequency perspective), an electrical sub-signal (e.g. from a temporal or frequency perspective) or a combination thereof.

The present disclosure is further directed to a computer-implemented method for detecting whether a portion of an input belongs to at least one class, comprising:

- encoding at least one fragment of the input, including the portion;
- obtaining an in-distribution probability distribution of the at least one class, the in-distribution probability distribution being a distribution of a probability to belong to the at least one class as a function of a result of at least one classifier model configured to classify the fragment;
- obtaining an out-of-distribution probability distribution, the out-of-distribution probability distribution being a distribution of a probability not to belong to any one of the at least one class as a function of the result of the at least one classifier model;
- determining whether the portion belongs to the at least one class based on a comparison between a likelihood that the at least one fragment belongs to one of the at least one class, determined based on the in-distribution probability distribution, and a likelihood that the at least one fragment does not belong to any one of the at least one class, determined based on the out-of-distribution probability distribution.

The method, hereinafter referred to as the detecting method, may be carried out by the above-described system and may have any of the features described with respect to the system. The method may be implemented on one or several computers.

The present disclosure is further directed to a computer-implemented method for training the above-described system, comprising:

- providing a pre-trained feature extractor;
- providing a training dataset;
- training the at least one classifier model based on features of the training dataset extracted by the feature extractor.

The feature extractor is configured to extract features from fragments to classify, as mentioned above. The extracted features are such that they can be processed by the at least one classifier model. The feature extractor is considered to be pre-trained, e.g. sufficiently trained before the above training method is carried out.

The type of training for the classifier model may be any suitable training. For instance, the classifier model training is optionally supervised, in which case the training dataset should comprise class labels. Semi-supervised, weakly supervised trainings, but also self-supervised or unsupervised trainings are encompassed too. The training may be based on a contrastive loss function, namely a loss function such that inputs which are deemed similar in view of a certain criterion are made close to one another in the network latent space (also referred to as the feature space), whereas inputs which are deemed dissimilar in view of that criterion are made far away from one another in the network latent space, with a given metric. Contrastive learning enables to make the latent space a metric space, in order to have a natural metric on the latent space to ultimately classify the inputs.

Thanks to the above training method, the above-described system can be trained in an efficient manner, relying on a pre-trained feature extractor. In addition, as opposed to other approaches which train the feature extractor and the classifier model end-to-end, the present method proposes to use a generically pre-trained feature extractor.

The training method can be implemented on one or several computers.

Optionally, fragments of the inputs from the training dataset having a share of portions not belonging to the at least one class greater than a threshold are ignored. Since the fragment may contain more than one portion, it may also contain portions corresponding to more than one class. The inventors have observed that such mixed fragments degrade the OOD detection performance. As a consequence, ignoring the fragments having a share of portions (e.g. a percentage of the portions) not belonging to the at least one class greater than a threshold makes the training more robust and overall improves the OOD detection.

Optionally, the pre-trained feature extractor has been trained independently from the at least one class. The features are therefore extracted with no bias from the classes. This favors a better OOD detection for the system.

Optionally, the pre-trained feature extractor has been trained in a self-supervised manner. This enables to pre-train the feature extractor on a very large amount of data with little or no annotation costs. Thus, the feature extractor may provide very sophisticated features, the features being sophisticated enough to intrinsically represent any type of class that the classifier models will then have to handle.

Optionally, every element of the training dataset belongs to the at least one class. That is, the classifier models are trained on in-distribution data only. As mentioned above, neither the system nor the training method thereof requires any sample of OOD data to be able to efficiently detect OOD data.

The present disclosure is further directed to a computer program set including instructions for executing the steps of the above-described detecting method or training method when said program set is executed by at least one computer. This program can use any programming language and take the form of source code, object code or a code intermediate between source code and object code, such as a partially compiled form, or any other desirable form.

The present disclosure is further directed to a recording medium readable by a computer and having recorded thereon at least one computer program including instructions for executing the steps of the above-described detecting method or training method. The recording medium can be any entity or device capable of storing the program. For example, the medium can include storage means such as a ROM, for example a CD ROM or a microelectronic circuit ROM, or magnetic storage means, for example a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a block diagram illustration a detecting method according to an embodiment;
- FIG.2 includes charts illustrating results of various embodiments for determining a plurality of etalons;
- FIG. 3 is a block diagram illustrating a hardware structure of a system according to an embodiment.

DETAILED DESCRIPTION OF EMBODIMENTS

The present disclosure relates to OOD detection in classification tasks. Although applicable to a variety of input types, such as images, videos, audio signals, electrical signals or a combination thereof, the present disclosure takes, without loss of generality, the example of images. Hereinafter, for the sake of conciseness, the inputs comprising portions to classify may be simply referred to as images. As a consequence, the portions will be referred to as pixels and the fragments as patches (e.g. a subset of pixels in the image), without loss of generality. In alternatives, the portions may comprise a plurality of pixels. The patches may have a size equal to or greater than the portions, but less than the whole image.

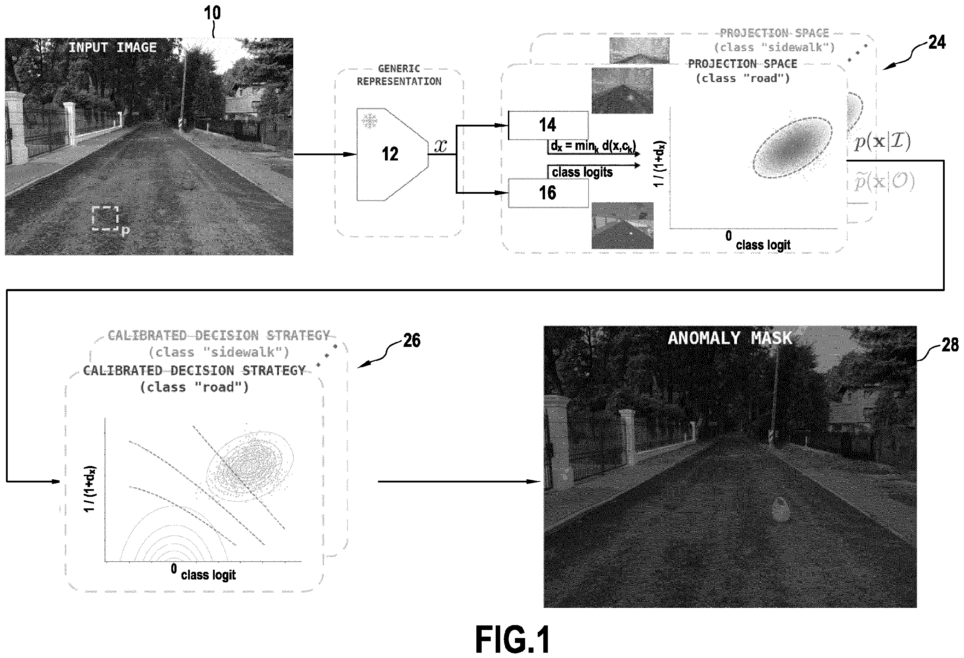

Figure 1 is a chart with reference to which a system for detecting whether a portion of an input belongs to at least one class, namely a system for OOD detection, will be described. Figure 1 shows an example of an input image 10, e.g. a photograph taken by a vehicle-mounted camera. The aim of the OOD detection, in this context, is to determine whether this image comprises an anomaly at the pixel-level. In this context, an anomaly is a part of the image that does not belong to any known or desired class, such as a pothole, an obstacle, etc.

As mentioned previously, the system is configured to encode at least one fragment of the input, namely at least one patch of the image 10 that includes the pixel(s) about which OOD determination is desired. In practice, when OOD is to be carried out over the whole image 10, every patch $p$ in the input image 10 is first transformed into a feature vector $\in \mathbb{R}^D$, e.g. by a fixed pre-trained feature extractor 12. The patch size may be determined by the feature extractor 12, in this case ViT architecture [REF. 11]. The representation, i.e. the result of the encoding, needs to be rich enough to allow modelling ID data in a given pixel-level vision task. An example of such pre-trained feature extractor 12 is the self-supervised trained DINOv2 encoder [REF. 2]. Similarly, methods such as [REF. 1] utilized pre-trained CLIP [REF. 3] image encoder for image-level OOD detection tasks.

Next, the system is configured to obtain an ID distribution and an OOD distribution as mentioned previously, as a function of a result of at least one classifier model 14 configured to classify the patch $p$. As a classifier model 14, a multi-layer perceptron (MLP) may be used. The MLP may comprise two layers with GELU (Gaussian Error Linear Unit) non-linearity that increase the representation power. An MLP is easy to use in the batch processing regime with increased volume of data, such as in pixel domain. The classifier model 14 uses logits to classify the patches, and therefore is able to output those logits (e.g. maximum logits) as an output score. However, other output scores may be considered.

Besides, the system may comprise a condenser 16 configured to determine a plurality of etalons $c_k$ representing each class. Once the etalons have been determined, the system may compute the distance $d_x = \min_k d(\boldsymbol{x}, \boldsymbol{c}_k)$ from the feature vector $\boldsymbol{x}$ to the nearest etalon for each class.

When combined, the scores (e.g. logit, similarity, etc.) and the distances to the nearest etalon produce a 2D space to which each sample is mapped. The ID distribution and the OOD distribution can be represented in that space. Therefore, the ID distribution and the OOD distribution can be expressed as N-dimensional distributions (here N=2). The projection space is thus formed (for each class independently) as $\mathcal{Z} = \mathcal{Z}_{\mathrm{MLP}} \times \mathcal{Z}_{\mathrm{N}c_k}$, where $\mathcal{Z}_{\mathrm{MLP}}$ is a one-dimension space of MLP logit scores for the particular class and $\mathcal{Z}\text{N}c_k$ is a one-dimension space of distances to the nearest class etalon found by the condenser. This space, which can be seen as a two-dimensional projection space, serves two purposes: first, it makes it possible to estimate the ID distribution with potentially limited data (e.g. about 200 training samples per class); second, it allows making reasonable assumptions about the unknown OOD distribution, which would be more difficult in the feature extractor's high-dimensional space.

Note that other projections spaces may be used instead of the one proposed above, provided that the dimensions chosen enable to make reasonable assumptions on where the OOD distribution would lie and that the ID distribution be compact and clearly separated from the OOD distribution. The number of dimensions of the projection space is a trade-off between the generic properties of the space and the representation quality of the ID/OOD distributions. For instance, the number of dimensions may be less than 10, preferably less than 8, than 5 or even than 3. The chosen dimensions should be complementary to each other.

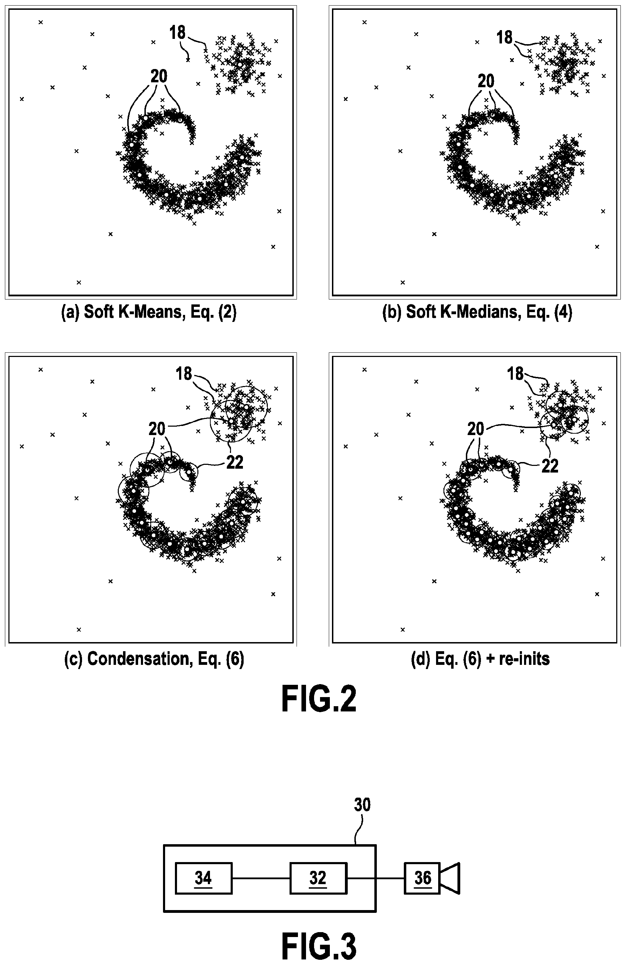

An embodiment of determining of the etalons by the condenser is detailed below, with reference to Fig. 2. Instead of using a single etalon, e.g. the mean, as in [REF. 1], the system may use a plurality of etalons, e.g. up to $K$ etalons per class. Let $T = \{x_i \in X \equiv \mathbb{R}^D\}_{i=1}^N$ be a (potentially large) dataset of training samples from one class. The dimensionality of the samples depends on the representation used (e.g. $D = 2$ or $D = 1024$). The dataset condensation task is to find up to $K$ etalons (representatives) $c_1,...,c_K$ ($c_k \in X$) that cover the training data, all data points should be close to an etalon. The number of etalons may not be fixed, but may be upper-bounded by $K$ (a "budget"). Further, it is preferable that each etalon should represent a similar portion of the data (e.g. the same number of training samples of the given class, with a tolerance).

Let $c = (c_1,...,c_K)$ be the etalon coordinates and let $d(x,c_k)$ be the $L_2$ distance between a data point $x$ and an etalon $c_k$. The etalon coordinates may be trainable, e.g. by K-means algorithm which optimizes

$$c^* = \arg \min_c \frac{1}{N} \sum_{i=1}^N \min_k d(x_i, c_k)^2 \ . \tag{1}$$

This objective is not smooth due to the hard assignment to the closest etalon. Also, K-means tends to get stuck in local minima and is known to be sensitive to outliers in data due to the square of the distance. To make the criterion smooth, it is preferable to use a smooth approximation of the min operator:

$$c^* = \arg \min_c \frac{1}{N} \sum_{i=1}^N \sum_{k=1}^K w(k,i;\tau) d(x_i, c_k)^2 \tag{2}$$

$$w(k,i;\tau) = \frac{exp\left(-d(x_i,c_k)^2/\tau\right)}{\sum_{j=1}^K exp\left(-d(x_i,c_j)^2/\tau\right)} \ , \tag{3}$$

where Eq. (3) is the softmin function with temperature scaling $\tau$. The temperature scaling allows a smooth transition from a soft assignment (easier to optimise, less susceptible to local minima) and a hard assignment (the goal of condensation). During the optimisation, the value of $\tau$ may be scheduled to decrease from a large (soft assignment) to a low value (hard assignment) based on the iteration number. Alternatively, the variation of the temperature scaling $\tau$ may be trained.

Figure 2(a) illustrates a determination of etalons as per Eq. (2), which can be seen as a "soft K-means" type problem. In Fig. 2, example samples 18 are shown in an arbitrary two-dimensional space for purpose of illustration, and etalons 20 determined based on Eq. (2) are plotted. As can be seen, the smooth objective (2) is sensitive to outliers in data due to the square of the distance: most etalons converge towards isolated data points (outside the boundaries of Fig. 2(a)).

When removing the square from Eq. (1), the solution to the problem becomes the K-medians algorithm.

Thus, the etalons may be determined by minimizing a smooth approximation of a K-median type problem, as shown by Eqs. (4) and (5):

$$c^* = \arg \min_{c} \frac{1}{N} \sum_{i=1}^{N} \sum_{k=1}^{K} w\,(k,i;\tau) d(\boldsymbol{x}_i, \boldsymbol{c}_k) \qquad (4)$$

$$w(k,i;\tau) = \frac{exp\,(-d(\boldsymbol{x}_i, \boldsymbol{c}_k)/\tau)}{\sum_{j=1}^{K} exp\,(-d(\boldsymbol{x}_i, \boldsymbol{c}_j)/\tau)} \qquad (5)$$

Equations (4) and (5) can be solved by iterative methods, such as stochastic gradient descent, and allow the soft-hard assignment transition through the temperature $\tau$ parameter. Figure 2(b) illustrates a determination of etalons as per Eq. (4), which can be seen as a "soft K-median" type problem. While providing more useful etalons 20 than K-means, Eq. (4) still fails to optimally represent all the training samples.

As mentioned above, optionally, each of the etalons representing a given class is defined to cover the same number of training samples of the given class, with a tolerance. To that end, each etalon may be assigned a trainable scale parameter $\beta = (\beta_1,..., \beta_K)$ to make it adaptive to the varying local data density. Instead of just dividing the distance by the parameter $(d(\boldsymbol{x}_i, \boldsymbol{c}_k)/\beta_k)$ in the formula, which would have a trivial minimiser for $\beta_k = \infty$, the distance may be replaced by a logarithm of the Laplace distribution which regularises the $\beta_k$ parameter to avoid this degenerated solution. This gives the final loss optimised by the proposed algorithm:

$$L(\boldsymbol{c}, \boldsymbol{\beta}; T, \tau) = -\frac{1}{N} \sum_{i=1}^{N} \sum_{k=1}^{K} w\,(k,i;\tau) \log \left( \frac{1}{\beta_k} e^{-\frac{d(\boldsymbol{x}_i, \boldsymbol{c}_k)}{\beta_k}} \right), \qquad (6)$$

where $w(k,i;\tau)$ is defined in Eq. (5).

Figure 2(c) illustrates a determination of etalons as per Eq. (6), which is referred to herein as the condensation method. Condensation adds to each cluster the scale parameter $\beta_k$, which is illustrated by a circle 22 around each etalon 20. As can be seen, the dense regions are more accurately covered by the etalons 20.

The inventors have shown that, interestingly, Eq. (6) can also be interpreted as a lower bound on the complete data log-likelihood in EM (Expectation-Maximization) algorithm for a mixture of spherical Laplace distributions with equal priors.

To some extent, the soft-hard scheduling (e.g. the variation of the temperature scaling $\tau$) helps to alleviate converging to a local optimum only, but the result of the optimization may still depend on the initialization. In order to avoid the use of computationally expensive heuristic initialisation methods, it is proposed that the system re-initializes etalons that represent less training samples than a threshold, optionally after a warm-up time.

For instance, the support of each etalon in a data sample (mini-batch) may be computed as

$$s(k) = \sum_{i=1}^{N} w\,(k,i;\tau) . \qquad (7)$$

A small support is indicative of a misplaced etalon. In the stochastic optimisation, the mini-batch data samples are often small and biased (taken from a few images only), resulting in noisy $s(k)$ estimate. To address this issue, the support may be estimated using init-unbiased running exponential weighted average [REF. 4] over mini-batches. Given a decay rate $q$, at the iteration t the estimate is computed as

$$s_t(k) = (1 - q_t) s_{t-1}(k) + q_t s(k) \quad \text{where} \quad q_t = q \,/(1 - (1 - q)^t). \qquad (8)$$

An etalon may be reset if, after a warm-up number of iterations, its $s_t(k) < \theta_r$, where $\theta_r$ is a threshold. The etalon may be reset to a random data point from the mini-batch, possibly with noise added to avoid degenerate configurations.

As shown in Fig. 2(d), the re-initialization improves the condensation method of Fig. 2(c) by enabling a greater number of etalons to represent dense areas: the re-initialization preserves the etalons and allows them to focus on smaller data regions.

The proposed condensation method may be summarized by the pseudo-code below (not showing the variation of the temperature scaling $\tau$):

Given: $T = \{x_i \in \mathbb{R}^D\}_{i=1}^N$

Initialise: $\boldsymbol{c}, \boldsymbol{\beta}, \tau, q, \lambda$

**for** epoch $<$ num. epochs **do**

    **for** $X = \{x_i\}_{i=1}^n \subset T$ **do**           //iterate over batches

        Compute $d(\boldsymbol{x}_i, \boldsymbol{c}_k) \quad \forall \boldsymbol{x}_i \in X, \forall \boldsymbol{c}_k \in \boldsymbol{c}$

        Compute $w\ (k, i\ ; \tau)$           //Eq. (5)

        Compute $L\ (\boldsymbol{c}, \boldsymbol{\beta}\ ; T, \tau)$           //Eq. (6)

        $\forall \boldsymbol{c}_k \ ; \boldsymbol{c}_k \leftarrow \boldsymbol{c}_k - \lambda \frac{\partial L}{\partial \boldsymbol{c}_k}$

        $\forall \beta_k \ ; \beta_k \leftarrow \beta_k - \lambda \frac{\partial L}{\partial \beta_k}$

        Update $s_t(k)$           //Eq. (8)

    **end for**

    **if** epoch $>$ epoch$_{\mathrm{warmup}}$ and $s_t(k) < \theta_r$ **then**

        Re-initialise $\boldsymbol{c}_k$

    **end if**

**end for**

With reference back to Fig. 1, once the etalons have been obtained, the ID distribution and OOD distribution can be determined, e.g. based on the etalons. Specifically, the ID distribution and/or the OOD distribution may be determined as a function of a distance to a nearest etalon for the at least one class. As an example, the ID and the OOD may be modelled as normal distributions in the above-mentioned projection space $\mathcal{Z}$, following the principles of [REF. 1]: the ID distribution may be modelled as a two-dimensional distribution based on the training dataset (e.g. directly computed from the training dataset, or a predefined distribution, e.g. a normal distribution, fitted on the training data for each class). The OOD distribution may be modelled as a two-dimensional distribution based on the properties of the dimensions of the projection space. If the OOD distribution is assumed to be uniform in $\mathcal{X}$, the OOD detection would merely be based on the quantiles of the ID distribution. However, the projection space $\mathcal{Z}$ was constructed not from general 1D random variables, but from the classification score of the classifier model 14 (MLP) and the distance to the nearest etalon. It is thus reasonable to assume that the OOD data will lie in regions where the classifier model 14 does not detect ID data, e.g., in the present case, where the MLP score is low, and where the distance to the nearest etalon is large.

Several types of distributions may be envisaged. In an example, the OOD distribution may be modeled as a normal distribution.

For instance, the mean of the normal OOD distribution may be zero. Zero is the mean for MLP scores representing an average non-ID-class data. As regards the distance to the nearest etalon, it is reasonable to assume that when the distance $d_x$ to the nearest etalon is large, the normalized distance $1/(1 + d_x)$ will tend towards zero.

For instance, the covariance of the OOD distribution may be a diagonal covariance matrix with large variances (see [REF. 1] for detailed reasoning). As an alternative, the out-of-distribution probability distribution may be determined based on results of the classifier models 14 on a training dataset thereof, namely the actual ID data ranges.

As generally indicated by reference 24 in Fig. 1, an ID distribution and an OOD distribution can be represented in the projection space for each class.

On that basis, the ID/OOD classification problem (or OOD detection problem) may be formulated as a multi-class Neyman-Pearson task [REF. 5], as in [REF. 1]. Let $\mathcal{J}$ be a single (meta-)class representing the ID samples from a target

class and $\mathcal{O}$ the (meta-)class for OOD data. Both, $p(z|\mathcal{J})$ and $p(z|\mathcal{O})$ are modelled as multivariate normal distributions in $z \in \mathcal{Z}$. The task is then to find a strategy $q^*(z){:}\mathcal{Z}{\rightarrow}\{\mathcal{J},\mathcal{O}\}$ such that

$$q^* = \arg\min_{q} \int_{z:q(z)\neq\mathcal{O}} p\left(z|\mathcal{O}\right) dz$$
$$\text{s.t.} \quad \epsilon_\mathcal{J} = \int_{z:q(z)\neq\mathcal{J}} p\left(z|\mathcal{J}\right) dz \leq \epsilon \tag{1}$$

This optimization problem minimizes the false positive rate (false $\epsilon$ acceptance of OOD data) and bounds the ID false negative rate by . For *K* classes, *K* such problems can be specified. Optionally, the same constant $\epsilon$ is used for all of them, so that the same fixed rejection rate is required for all classes. That is, the comparison takes into account a threshold which equalizes a false negative rate for the two or more (*K*) classes.

The optimal strategy for a given $z \in \mathcal{Z}$ may be constructed using a likelihood ratio $r(z) = p(z|\mathcal{J})/p(z|\mathcal{O})$ so that $q(z) = \mathcal{J}$ if $r(z) > \mu$ and $q(z) = \mathcal{O}$ if $r(x) \leq \mu$. The optimal strategy $q^*$ is obtained by selecting the minimal threshold $\mu$ such that $\epsilon_\mathcal{J} \leq \epsilon$. The problem may be solved either analytically for some simple distributions or numerically otherwise.

More generally, the system is thus configured to determine whether the fragment *x* belongs to the at least one class $\mathcal{J}$, given its projection *z* in the above-mentioned projection space, based on a comparison here a ratio $r(z)$, between a likelihood $p(z|\mathcal{J})$ that the fragment *z* belongs to one of the at least one class, determined based on the in-distribution probability distribution, and a likelihood $p(z|\mathcal{O})$ that the fragment *z* does not belong to any one of the at least one class, determined based on the out-of-distribution probability distribution. For determining the ID likelihood, the most probable class for fragment *x* can be taken as class $\mathcal{J}$.

In Fig. 1, reference 26 generally shows decision boundaries depending on the selected rejection rate $\epsilon$.

The final decision is "OOD" if, for all classes, the fragment falls below the decision threshold, otherwise it is classified as one of the ID classes by the classifier model 14. As illustrated in Figure 1, it is thus possible to obtain a dense pixel-level anomaly mask 28 of the input image 10, showing the anomalies (here a basket lying on the road) as compared to the classes in the training dataset (e.g. road, sidewalk, etc.).

When the processed patches comprise a plurality of pixels, it is possible that some patches contain more than one pixel-level semantic label (e.g. patch on boundary of road and sidewalk will contain labels of both classes). Although they are relatively rare, such patches may have a negative impact on the training of the condensation algorithm. Thus, it is desired to consider only patches with more than 90% of one class label during training. In other words, patches from the training dataset having a share of pixels not belonging to the at least one class (e.g. a single one of the classes) greater than a threshold (e.g. 50%, preferably 20%, preferably 10%) are ignored. At inference time, all patches may be processed equally. The training of the classifier model 14 may be performed on the original input resolution by up-scaling the classifier output logits, and thus the mixed patches have no effect.

Besides, the proposed system works with patches and thus on a lower than original resolution. To obtain the final full resolution OOD score, the output score map may be upscaled. Further, up-scaling the encoder's feature maps at the inference time (but *not* during training) works better than only up-scaling the final OOD scores. In other words, it is desirable to upscale the encoded at least one fragment. Upscaling may be performed by a factor greater than or equal to 2, preferably 5, preferably 7. The upscaling factor may be determined based on a downsampling factor of the feature extractor 12.

Experiments were conducted with the proposed system, with the following setup: no anomaly or OOD data (such as auxiliary datasets or synthetic anomalies through augmentation) is used during training, except for the LaRS dataset [REF. 6] where the obstacle class is part of training data. As a feature extractor 12, frozen DINOv2 [REF. 2] ViT-L variant is used in all experiments. Training is carried out using AdamW optimizer: the condensation algorithm (100 epochs, starting learning rate 0.1 with cosine decay and 'budget' *K* set to 1000), classification MLP (30 epochs with learning rate 0.0001). The final calibrated strategy is found on available training data for respective task.

An ablation study showed that the system performs much better with a plurality of etalons than with a single mean representation, in order to model complex intra-class variability in the pixel-level domain. Besides, robustness of the proposed condensation method is demonstrated by increased performance compared to standard K-means and K-medians algorithms. The performance can be improved by allowing a larger budget K (maximum number of etalons) and seems to saturate around K=1000.

As the proposed system is generic, experiments were conducted on various dataset and OOD detection tasks, including road anomaly detection, industrial anomaly detection and maritime obstacle detection. The system performed favorably, if not best, with all these tasks, demonstrating its versatility in different settings and domains. Besides, since the proposed system is generic, it is of interest to evaluate its combination with a specialized module for a particular task (e.g., in the case of road anomaly detection, the reconstruction module from DaCUP [REF. 7], or in the case of industrial anomaly detection, DRAEM [REF. 8]). The final anomaly score may be a combination of the system score and the specialized module score, e.g. a simple average. The resulting task-augmented system significantly boosts the results, showing that domain-specific knowledge and generic OOD detection approach are complementary to a degree.

The aforementioned detecting method may be implemented as described above in relation to the system.

With reference to Fig. 3, the proposed system 30 may comprise an electronic circuit, a processor (shared, dedicated, or group) 32, a combinational logic circuit, a memory that executes one or more software programs, and/or other suitable components that provide the described functionality. In other words, the system 30 may be a computer device. The detection system 30 may have or may be connected to a memory 34, which may store data, e.g. a computer program which when executed, carries out the detecting method according to the present disclosure. In particular, the system 30 or the memory 34 may store software which comprises one or more classifier models according to the present disclosure. The memory 34 may serve as a recording medium readable by a computer and having recorded thereon at least one computer program including instructions for executing the steps of the detecting method.

The proposed system 30 may have an input channel for receiving inputs such as the images 10. In particular, the system 30 may be connected to a sensor 36, in particular a digital camera. The digital camera is configured such that it can record a scene, and in particular output digital data to the system 30.

If the detecting method is to be carried out in real time, one or more of the images 10 may be acquired in real time by an image acquisition module, such as a video acquisition module, e.g. a camera or the like (video cameras, photo cameras, etc.). Alternatively or in addition, the at least one image may be acquired beforehand, and obtained by the system 30 later, e.g. in case of post-processing of the filmed process.

The system 30 and the detecting method may be used in the context of a driving method for driving a vehicle, which driving method may further comprise an acquisition step of acquiring the inputs (images 10) from at least one in-vehicle sensor, and a controlling step of controlling the vehicle based on whether the image show in-distribution or out-of-distribution data. For instance, the vehicle may stop autonomous driving and ask an operator to take over, if the image shows an unidentified (OOD) object.

In other embodiments, the detecting method may be used in the context of a method for supporting human activities in a factory. For instance, the method may further comprise an acquisition step of acquiring the inputs (images 10) from at least one sensor in the factory, and a controlling step of controlling the factory facilities (i.e. starting/stopping a device, issuing a warning signal, recording data, etc.) based on whether the image show in-distribution or out-of-distribution data.

In other embodiments, the detecting method may be used in the context of industrial control. For instance, the method may further comprise an acquisition step of acquiring the inputs (images 10) relating to a manufactured part from at least one sensor, and a validating step of validating or not the part based on whether the image shows an anomaly (OOD data) in the part.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A system (30) for detecting whether a portion of an input (10) belongs to at least one class, the system being configured to:

    - encode at least one fragment ($p$) of the input, including the portion;
    - obtain an in-distribution probability distribution of the at least one class, the in-distribution probability distribution being a distribution of a probability to belong to the at least one class as a function of a result of at least one classifier model (14) configured to classify the fragment;
    - obtain an out-of-distribution probability distribution, the out-of-distribution probability distribution being a distribution of a probability not to belong to any one of the at least one class as a function of the result of the at least one classifier model (14);

- determine whether the portion belongs to the at least one class based on a comparison between a likelihood that the at least one fragment ($p$) belongs to one of the at least one class, determined based on the in-distribution probability distribution, and a likelihood that the at least one fragment ($p$) does not belong to any one of the at least one class, determined based on the out-of-distribution probability distribution.

2. The system of claim 1, further configured to determine a plurality of etalons (20) representing some or each of the at least one class, optionally in an iterative manner, wherein at least one of the in-distribution probability distribution and the out-of-distribution probability distribution is determined based on the etalons (20).

3. The system of claim 2, wherein the system is configured to determine the plurality of etalons (20) by minimizing a smooth approximation of a K-median type problem.

4. The system of claim 2 or 3, wherein each of the etalons (20) representing a given class is defined to cover the same number of training samples of the given class, with a tolerance.

5. The system of any one of claims 2 to 4, further configured to re-initialize etalons (20) that represent less training samples than a threshold, optionally after a warm-up time.

6. The system of any one of claims 2 to 5, wherein at least one of the in-distribution probability distribution and the out-of-distribution probability distribution is determined as a function of a distance to a nearest etalon (20) for the at least one class.

7. The system of any one of claims 1 to 6, wherein at least one of the in-distribution probability distribution and the out-of-distribution probability distribution is determined as a function of an output score of the classifier model (14).

8. The system of any one of claims 1 to 7, wherein the in-distribution probability distribution and the out-of-distribution probability distribution are N-dimensional distributions, N greater than or equal to 2 and optionally N less than or equal to 10.

9. The system of any one of claims 1 to 8, further configured to upscale the encoded at least one fragment ($p$).

10. The system of any one of claims 1 to 9, wherein the input (10) comprises at least one image, at least one video, at least one audio signal, at least one electrical signal or a combination thereof.

11. A computer-implemented method for detecting whether a portion of an input (10) belongs to at least one class, comprising:

   - encoding at least one fragment ($p$) of the input, including the portion;
   - obtaining an in-distribution probability distribution of the at least one class, the in-distribution probability distribution being a distribution of a probability to belong to the at least one class as a function of a result of at least one classifier model (14) configured to classify the fragment;
   - obtaining an out-of-distribution probability distribution, the out-of-distribution probability distribution being a distribution of a probability not to belong to any one of the at least one class as a function of the result of the at least one classifier model (14);
   - determining whether the portion belongs to the at least one class based on a comparison between a likelihood that the at least one fragment ($p$) belongs to one of the at least one class, determined based on the in-distribution probability distribution, and a likelihood that the at least one fragment ($p$) does not belong to any one of the at least one class, determined based on the out-of-distribution probability distribution.

12. A computer-implemented method for training the system of any one of claims 1 to 10, comprising:

   - providing a pre-trained feature extractor (12);
   - providing a training dataset;
   - training the at least one classifier model (14) based on features of the training dataset extracted by the feature extractor (12).

13. The method of claim 12, wherein fragments of the inputs from the training dataset having a share of portions not belonging to the at least one class greater than a threshold are ignored.

**14.** A computer program set including instructions for executing the steps of the method of any one of claims 11 to 13 when said program set is executed by at least one computer.

**15.** A recording medium readable by a computer and having recorded thereon at least one computer program including instructions for executing the steps of the method of any one of claims 11 to 13.

**Amended claims in accordance with Rule 137(2) EPC.**

**1.** A system (30) for detecting whether a portion of an input (10) belongs to at least one class, wherein the input (10) comprises at least one image, at least one video, at least one audio signal, at least one electrical signal or a combination thereof, the system being configured to:

- encode at least one fragment (p) of the input, including the portion;
- obtain an in-distribution probability distribution of the at least one class, the in-distribution probability distribution being a distribution of a probability to belong to the at least one class as a function of a result of at least one classifier model (14) configured to classify the fragment;
- obtain an out-of-distribution probability distribution, the out-of-distribution probability distribution being a distribution of a probability not to belong to any one of the at least one class as a function of the result of the at least one classifier model (14);
- determine whether the portion belongs to the at least one class based on a comparison between a likelihood that the at least one fragment (p) belongs to one of the at least one class, determined based on the in-distribution probability distribution, and a likelihood that the at least one fragment (p) does not belong to any one of the at least one class, determined based on the out-of-distribution probability distribution.

**2.** The system of claim 1, further configured to determine a plurality of etalons (20) representing some or each of the at least one class, optionally in an iterative manner, wherein at least one of the in-distribution probability distribution and the out-of-distribution probability distribution is determined based on the etalons (20).

**3.** The system of claim 2, wherein the system is configured to determine the plurality of etalons (20) by minimizing a smooth approximation of a K-median type problem.

**4.** The system of claim 2 or 3, wherein each of the etalons (20) representing a given class is defined to cover the same number of training samples of the given class, with a tolerance.

**5.** The system of any one of claims 2 to 4, further configured to re-initialize etalons (20) that represent less training samples than a threshold, optionally after a warm-up time.

**6.** The system of any one of claims 2 to 5, wherein at least one of the in-distribution probability distribution and the out-of-distribution probability distribution is determined as a function of a distance to a nearest etalon (20) for the at least one class.

**7.** The system of any one of claims 1 to 6, wherein at least one of the in-distribution probability distribution and the out-of-distribution probability distribution is determined as a function of an output score of the classifier model (14).

**8.** The system of any one of claims 1 to 7, wherein the in-distribution probability distribution and the out-of-distribution probability distribution are N-dimensional distributions, N greater than or equal to 2 and optionally N less than or equal to 10.

**9.** The system of any one of claims 1 to 8, further configured to upscale the encoded at least one fragment (p).

**10.** A computer-implemented method for detecting whether a portion of an input (10) belongs to at least one class, wherein the input (10) comprises at least one image, at least one video, at least one audio signal, at least one electrical signal or a combination thereof, comprising:

- encoding at least one fragment (p) of the input, including the portion;
- obtaining an in-distribution probability distribution of the at least one class, the in-distribution probability distribution being a distribution of a probability to belong to the at least one class as a function of a result of at least one classifier model (14) configured to classify the fragment;

- obtaining an out-of-distribution probability distribution, the out-of-distribution probability distribution being a distribution of a probability not to belong to any one of the at least one class as a function of the result of the at least one classifier model (14);
- determining whether the portion belongs to the at least one class based on a comparison between a likelihood that the at least one fragment (p) belongs to one of the at least one class, determined based on the in-distribution probability distribution, and a likelihood that the at least one fragment (p) does not belong to any one of the at least one class, determined based on the out-of-distribution probability distribution.

11. A computer-implemented method for training the system of any one of claims 1 to 9, comprising:

- providing a pre-trained feature extractor (12);
- providing a training dataset;
- training the at least one classifier model (14) based on features of the training dataset extracted by the feature extractor (12).

12. The method of claim 11, wherein fragments of the inputs from the training dataset having a share of portions not belonging to the at least one class greater than a threshold are ignored.

13. A computer program set including instructions for executing the steps of the method of any one of claims 10 to 12 when said program set is executed by at least one computer.

14. A recording medium readable by a computer and having recorded thereon at least one computer program including instructions for executing the steps of the method of any one of claims 10 to 12.

FIG.1

(a) Soft K-Means, Eq. (2)

(b) Soft K-Medians, Eq. (4)

(c) Condensation, Eq. (6)

(d) Eq. (6) + re-inits

**FIG.2**

**FIG.3**

**EUROPEAN SEARCH REPORT**

Europäisches Patentamt
European Patent Office
Office européen des brevets

**Application Number**

EP 24 16 8790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI RUOQI ET AL: "Out-of-Distribution Identification: Let Detector Tell Which I Am Not Sure", COMPUTER VISION - ECCV 2022: 17TH EUROPEAN CONFERENCE, PROCEEDINGS. LECTURE NOTES IN COMPUTER SCIENCE, 23 October 2022 (2022-10-23), XP047638630, DOI: 10.1007/978-3-031-20080-9_37 * the whole document * | 1-15 | INV. G06F18/2415 G06F18/2433 G06V10/764 G06V20/58 |
| A,D | VOJIR TOMAS ET AL: "Calibrated Out-of-Distribution Detection with a Generic Representation", 2023 IEEE/CVF INTERNATIONAL CONFERENCE ON COMPUTER VISION WORKSHOPS (ICCVW), IEEE, 2 October 2023 (2023-10-02), pages 4509-4518, XP034503653, DOI: 10.1109/ICCVW60793.2023.00485 [retrieved on 2023-12-25] * the whole document * | 1-15 | |
| | | | **TECHNICAL FIELDS SEARCHED (IPC)** G06F G06V |

The present search report has been drawn up for all claims

| Place of search | Date of completion of the search | Examiner |
|---|---|---|
| The Hague | 26 August 2024 | de Bont, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MAXIME OQUAB** ; **TIMOTHÉE DARCET** ; **THEO MOUTAKANNI** ; **HUY V. VO** ; **MARC SZAFRANIEC** ; **VASIL KHALIDOV** ; **PIERRE FERNANDEZ** ; **DANIEL HAZIZA** ; **FRANCISCO MASSA** ; **ALAAELDIN EL-NOUBY**. *Dinov2: Learning robust visual features without supervision*, 2023
- **ALEC RADFORD** ; **JONG WOOK KIM** ; **CHRIS HALLACY** ; **ADITYA RAMESH** ; **GABRIEL GOH** ; **SANDHINI AGARWAL** ; **GIRISH SASTRY** ; **AMANDA ASKELL** ; **PAMELA MISHKIN** ; **JACK CLARK et al.** Learning transferable visual models from natural language supervision. *International Conference on Machine Learning*, 2021, 8748-8763
- **DIEDERIK P KINGMA** ; **JIMMY BA. ADAM**. A method for stochastic optimization. *arXiv:1412.6980*, 2014
- **JERZY NEYMAN** ; **EGON SHARPE PEARSON**. Ix. on the problem of the most efficient tests of statistical hypotheses. Philosophical Transactions of the Royal Society of London. *Series A, Containing Papers of a Mathematical or Physical Character*, 1933, vol. 231 (694-706), 289-337
- **LOJZE ZUST** ; **JANEZ PERS** ; **MATEJ KRISTAN**. LaRS: A Diverse Panoptic Maritime Obstacle Detection Dataset and Benchmark. *ICCV*, 2023
- **VITJAN ZAVRTANIK** ; **MATEJ KRISTAN** ; **DANIJEL SKOCAJ.** DRAEM - A Discriminatively Trained Reconstruction Embedding for Surface Anomaly Detection. *ICCV*, 2021
- **KOPF et al.** Joint Bilateral Upsampling. *Proceedings of SIGGRAPH*, 2007
- **FU et al.** FeatUp: A Model-Agnostic Framework for Features at Any Resolution. *ICLR*, 2024
- **DOSOVITSKIY et al.** An Image is Worth 16x16 Words: Transformers for Image Recognition at Scale. *ICLR*, 2021